(19) Europäisches Patentamt
European Patent Office
Office européen des brevets

(11) Veröffentlichungsnummer : **0 245 815 B1**

# (12) EUROPÄISCHE PATENTSCHRIFT

(45) Veröffentlichungstag der Patentschrift : **02.01.91 Patentblatt 91/01**

(51) Int. Cl.$^5$ : **C08G 73/10**, C08G 73/14

(21) Anmeldenummer : **87106794.8**

(22) Anmeldetag : **11.05.87**

## (54) Neue lösliche und/oder schmelzbare Polyimide und Polyamidimide.

Die Akte enthält technische Angaben, die nach dem Eingang der Anmeldung eingereicht wurden und die nicht in dieser Patentschrift enthalten sind.

(30) Priorität : **16.05.86 AT 1309/86**

(43) Veröffentlichungstag der Anmeldung : **19.11.87 Patentblatt 87/47**

(45) Bekanntmachung des Hinweises auf die Patenterteilung : **02.01.91 Patentblatt 91/01**

(84) Benannte Vertragsstaaten : **AT BE CH DE ES FR GB IT LI NL SE**

(56) Entgegenhaltungen :
**EP-A- 0 162 606**
**EP-A- 0 210 036**
**US-A- 4 526 838**

(73) Patentinhaber : **Chemie Linz Gesellschaft m.b.H.**
**St.Peter-Strasse 25**
**A-4021 Linz (AT)**
**BE CH DE ES FR GB IT LI NL SE AT**

(72) Erfinder : **Greber, Gerd, Dr.**
**Anzengruberstrasse 11**
**A-2540 Bad Vöslau (AT)**
Erfinder : **Gruber, Heinrich, Dr.**
**Cottagegasse 82**
**A-1190 Wien (AT)**
Erfinder : **Sychra, Marcel, Dipl.-Ing.**
**Friedhofstrasse 44/11**
**A-2103 Langenzersdorf (AT)**

(74) Vertreter : **Kunz, Ekkehard, Dr.**
**Chemie Holding AG Patentwesen St. Peter-Strasse 25**
**A-4021 Linz (AT)**

**EP 0 245 815 B1**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue Saint-Denis, 75001 PARIS

**Beschreibung**

Die Erfindung betrifft neue lösliche und/oder schmelzbare aromatische Polyimide und Polyamidimide, sowie ein Verfahren zu deren Herstellung.

Die bis heute technisch wichtigsten extrem thermostabilen Polymere sind aromatische Polyimide, wie sie etwa in Macromol. Revs. 11, 161-208 (1976) beschrieben sind.

Sie können beispielsweise in 2 Stufen durch Polyaddition oder Polykondensation und anschließende Cyclisierung hergestellt werden. In der ersten Stufe wird ein aromatisches Diamin beispielsweise mit einem aromatischen Tetracarbonsäuredianhydrid zur Polyamidsäure polyaddiert. In dieser Form sind die Polymere noch gut löslich und können z.B. zu Folien und Fasern verarbeitet werden. In der zweiten Stufe erfolgt durch thermische oder chemische Wasserabspaltung die intramolekulare Cyclisierung zum unlöslichen, hochwärmebeständigen Polyimid. Da in geringem Umfang auch schon bei Raumtemperatur die Umwandlung der Polyamidsäure in das unlösliche Polyimid erfolgt und somit mit zunehmender Zeitdauer der Anteil der löslichen Polyamidsäure abnimmt, sind die Polyamidsäurelösungen nur begrenzt lagerfähig.
Die ausschließlich aus aromatischen Bausteinen bestehenden Polyimide - z.B. Polypyromellitimide - sind zwar extrem thermostabil, aber völlig unlöslich und unschmelzbar, also nur schwer verarbeitbar (J. Polymer Sci. A, Vol 3, 1373 -1390 (1975).

Diese schwierige Verarbeitbarkeit verteuert nicht nur die Anwendung dieser Polyimide, sondern schließt sie aus einer Reihe von interessanten Anwendungen aus.

Durch Veränderungen in der chemischen Struktur - z.B. durch Einbau von flexiblen Kettenelementen ($-CH_2-$,-O-,-S-,-CO-) oder sterisch anspruchsvollen Gruppen - konnten dann lösliche und/oder schmelzbare und damit einfacher verarbeitbare Polyimide erhalten werden (J. Polym. Sci. Vol. 12, 575-587 (1974), J. Appl. Polym. Sci. Vol. 28, 2069-2081 (1983)). Diese Polyimide weisen allerdings generell eine geringere thermische Stabilität auf.

Produkte mit vergleichbarem Eigenschaftsprofil stellen die Polyamidimide dar, die beispielsweise aus aromatischen Tricarbonsäuremonoanhydriden und aromatischen Diaminen hergestellt werden (J. Polym. Sci. Vol. 12,589-601 (1974). Auch sie sind in polaren organischen Lösungsmitteln löslich und zeigen meist thermoplastische Eigenschaften, besitzen aber im Vergleich zu den aromatischen Polyimiden ebenfalls eine geringere Thermostabilität.

Aufgabe der vorliegenden Erfindungen war es, neue Polyimide und Polyamidimide zu entwickeln, die bei extremer Thermostabilität in der cyclisierten Form löslich und/oder schmelzbar und somit nach herkömmlichen Methoden einfach verarbeitbar sind.

Gegenstand der vorliegenden Anmeldung sind demnach lösliche und/oder schmelzbare, bis 500°C in Luft beständige Polyimide oder Polyamidimide, enthaltend sich wiederholende Einheiten der allgemeinen Formel I des Formelblattes worin

R einen tri- oder tetravalenten aromatischen oder heteroaromatischen Rest und
-X- falls R tetravalent ist, einen Rest der Formel II des Formelblattes, und falls R trivalent ist, den Rest -CO-NH-darstellt,

oder Mischungen der tri- oder tetravalente Reste R enthaltenden Einheiten.

Bevorzugt sind Polyamidimide der allgemeinen Formel I des Formelblattes, die sowohl trivalente als auch tetravalente Reste R enthalten.
Erfindungsgemäß kommen alle bekannten tri- oder tetravalenten Reste R in Frage, die sich insbesondere von den entsprechenden Tri- oder Tetracarbonsäuren bzw. ihren Derivaten, wie beispielsweise Anhydriden, Estern oder Säurechloriden ableiten. Beispiele dafür sind Reste von Aromaten, kondensierten Aromaten, Heteroaromaten, sowie deren Derivaten. Bevorzugte tri- oder tetravalente Reste sind der Benzophenonrest oder der Benzolrest.

Die Herstellung der erfindungsgemäßen Polyimide oder Polyamidimide erfolgt durch Umsetzung von Tri- oder Tetracarbonsäuren, die den Rest R enthalten, oder von Gemischen dieser Tri- und Tetracarbonsäuren, oder von deren reaktiven Derivaten, wie z.B. Anhydriden, Säurechloriden oder Estern, mit einem Diamin der Formel III des Formelblattes. Die bei Verwendung von Tetracarbonsäuren zunächst entstehenden Polyamidsäuren werden anschließend chemisch oder thermisch zu den entsprechenden Polyimiden, die bei Verwendung von Tricarbonsäuren zunächst entstehenden Polyamidamidsäuren zu den entsprechenden Polyamidimiden cyclisiert.

Das Diamin der Formel III des Formelblattes kann beispielsweise durch Umsetzung des Natriumsalzes von Bis-(4-mercaptophenyl)sulfon mit überschüssigem 4-Chlornitrobenzol zu 1,4-Bis-(4-nitrophenylthio)diphenylsulfon und anschließende Reduktion der Nitrogruppen hergestellt werden. Das Bis(4-mercap-

tophenyl)sulfon wird beispielsweise gemäß US-PS 3 949 002 aus Bis(4-chlorphenyl)sulfon durch Reaktion mit $Na_2S$ und S erhalten.

Als Katalysatoren für die Reduktion der Nitrogruppen eignen sich neben Raney-Nickel auch Edelmetallkatalysatoren, wie Pt oder Pd auf Trägern. Prinzipiell kann die Dinitroverbindung aber auch mit Hilfe der bekannten chemischen Reduktionsmittel - beispielsweise Zinnchlorid/HCl - reduziert werden.

Im folgenden sind beispielhaft Tetracarbonsäuredianhydride angeführt, die mit dem Diamin der Formel III des Formelblattes zu den erfindungsgemäßen Polyimiden umgesetzt werden können :

4,4',5,5',6,6'-Hexafluorbenzophenon-2,2',3,3'-tetracarbonsäuredianhydrid
3,3'4,4'-Diphenyl-tetracarbonsäuredianhydrid
2,2',3,3'-Diphenyl-tetracarbonsäuredianhydrid
Bis(2,3-dicarboxyphenyl)methan-dianhydrid
Bis(3,4-dicarboxyphenyl)methan-dianhydrid
2,2-Bis(3,4-dicarboxyphenyl)propan-dianhydrid
2,2-Bis(2,3-dicarboxyphenyl)propan-dianhydrid
Bis(3,4-dicarboxyphenyl)äther-dianhydrid
Bis(2,3-dicarboxyphenyl)äther-dianhydrid
Bis(3,4-dicarboxyphenyl)sulfon-dianhydrid
Bis(3,4-dicarboxyphenyl)phenylphosphonat-dianhydrid
3,3',4,4'-Tetracarboxybenzoyloxybenzol-dianhydrid
1,4,5,8-Naphthalin-tetracarbonsäuredianhydrid
2,3,6,7-Naphthalin-tetracarbonsäuredianhydrid
1,2,5,6-Naphthalin-tetracarbonsäuredianhydrid
2,3,6,7-Tetrachlornaphthalin-1,4,5,8-tetracarbonsäuredianhydrid
Phenanthren-1,8,9,10-tetracarbonsäuredianhydrid
3,4,9,10-Perylen-tetracarbonsäuredianhydrid
Thiophen-2,3,4,5-tetracarbonsäuredianhydrid
Pyrazin-2,3,5,6-tetracarbonsäuredianhydrid
Pyridin-2,3,5,6-tetracarbonsäuredianhydrid

Zur Synthese der Polyamidimide setzt man beispielsweise Trimellitsäure, Trimellitsäureanhydridchlorid, Trimellitsäureanhydrid-methyl-, -ethyl- oder -isopropylester bzw. Trimellitsäureanhydrid mit dem Diamin der Formel III des Formelblattes um. Grundsätzlich eignen sich hierfür auch andere bekannte Tricarbonsäuremonoanhydride und ihre organischen oder anorganischen Ester.

Zur Herstellung der Polyimide setzt man bevorzugt Benzophenontetracarbonsäuredianhydrid bzw. Pyromellitsäuredianhydrid mit dem Diamin der Formel III des Formelblattes um. Im Falle der Polyamidimide verwendet man bevorzugt Trimellitsäureanhydridchlorid zur Umsetzung mit dem Diamin.

Gemischte Polyamidimide mit statistisch verteilten Polyamidimid- und Polyimid-Anteilen erhält man erfindungsgemäß durch Verwendung von Gemischen aus beispielsweise Tetracarbonsäuredianhydriden und Tricarbonsäuremonoanhydriden bzw. ihren Derivaten im jeweils notwendigen Molverhältnis. Auf diese Weise können z.B. die Glastemperaturen der Polymeren, die üblicherweise zwischen 230 und 290°C liegen, in der gewünschten Weise variiert werden.

Die inhärenten Viskositäten der erfindungsgemäß des Zwischenprodukt erhattenen Polyamidsäuren und Polyamidamidsäuren liegen im allgemeinen zwischen 0,1 und 4,0 dl/g.

Die Herstellung dieser Polyimide und Polyamidimide erfolgt beispielsweise in stark polaren Lösungsmitteln, wie z.B. Dimethylformamid (DMF), Dimethylacetamid (DMA), N-Methylpyrrolidon (NMP), Dimethylsulfoxid (DMSO), Tetramethylharnstoff oder Hexamethylphosphorsäuretriamid. Die Reaktionstemperatur kann je nach verwendeten Ausgangsstoffen und gewünschtem Endprodukt innerhalb eines weiten Bereiches schwanken. Bei Verwendung der reaktiven Anhydride bzw. Anhydridchloride liegen die Temperaturen zwischen −30 und +30°C, mit den weniger reaktiven Säuren bzw. Säureestern benötigt man Reaktionstemperaturen bis 150°C.

Die resultierenden Lösungen der Polyamidsäuren bzw. Polyamidamidsäuren können in bekannter Weise in Folien und Fasern übergeführt und anschließend thermisch unter Wasserabspaltung zu Ploylmiden bzw. Polyamidimiden cyclisiert werden, wobei zum Schluß für eine quantitative Cyclisierung Temperaturen bis 300°C notwendig sein können. Grundsätzlich sind solche Lösungen auch zur Laminierung einsetzbar, wobei jedoch das abgespaltene Wasser stören kann, so daß man hier zweckmäßigerweise den großen Vorteil der erfindungsgemäßen Polyimide und Polyamidimide ausnützt, daß sie auch in der cyclisierten Form noch gut in polaren Lösungsmitteln löslich sind.

Will man die Polyimide bzw. Polyamidimide dagegen in Pulverform isolieren -etwa als Preßpulver zur thermoplastischen Verformung - dann cyclisiert man chemisch mit Hilfe wasseraufnehmender Angentien, beispielsweise Essigsäureanhydrid, gegebenenfalls in Gegenwart von Pyridin oder anderen Basen. Die so erhaltenen Polyimide bzw. Polyamidimide können nun entweder unter Druck thermoplastisch verformt werden oder in polaren Lösungsmitteln gelöst werden. Aus solchen Lösungen kann man Folien, Fasern und Laminate herstellen, wobei der große Vorteil darin besteht, daß nach Entfernen des Lösungsmittels bereits fertig cyclisierte Polyimide und Polyamidimide vorliegen, also z.B. kein Wasser mehr abgespalten werden muß, was vor allem für Laminierungen von großer Bedeutung ist.

Mit Ausnahme des reinen Polyimids aus Pyromellitsäuredianhydrid und dem Diamin der Formel III des Formelblattes - das eine Glastemperatur von 280°C aufweist - sind die erfindungsgemäßen Polyimide und Polyamidimide in der voll cyclisierten Form in den oben genannten polaren Lösungsmitteln in Konzentrationen bis 20 Gew.% löslich. Alle diese Polyimide und Polyamidimide besitzen Glastemperaturen zwischen 230 und 290°C und sind unter Druck thermoplastisch verformbar.

Die Thermostabilitäten liegen bei den Polyimiden und Polyamid-imiden bis zu 500°C, gemessen in Luft mittels thermogravimetrischer Analyse (TGA) bei einer Aufheizgeschwindigkeit von 10°C/min (5% Gewichtsverlust).

Neben diesen ausgezeichneten Thermostabilitäten besitzen die erfindungsgemäßen Polyimide und Polyamidimide auch sehr gute mechanische (Reißfestigkeiten vorzugsweise von 79 bis 130 $N/mm^2$, E-Module vorzugsweise von 1200 bis 2900 $N/mm^2$, Reißdehnungen vorzugsweise von 4 bis 10%) und elektrische (dielektrische Verlustfaktoren vorzugsweise von 0,001 bis 0,008) Eigenschaften, sie zählen also zu den Hochleistungswerkstoffen.

Beispiel 1 :

Synthese von 1,4-Bis(4-aminophenylthio)diphenylsulfon

a) Herstellung von 1,4-Bis(4-nitrophenylthio)diphenylsulfon

Ansatz: 14,4 g (50 mmol) Bis(4-mercaptophenyl)sulfon
(hergestellt nach US-PS 3 949 002)
31,6 g (200 mmol) p-Chlornitrobenzol
6 g (150 mmol) NaOH
250 ml Dimethylformamid (DMF)

In einem 500 ml-Dreihalskolben (Rückflußkühler, Thermometer, $N_2$-Einleitung, Magnetrührer) werden Bis(4-mercaptophenyl)sulfon und NaOH (in 10 ml Wasser) in Dimethylformamid unter Rühren und $N_2$-Atmosphäre bei ca. 100°C gelöst. Zu dieser Reaktionslösung wird p-Chlornitrobenzol zugetropft, die Lösung 2 Stunden unter Rückfluß gerührt, dann abkühlen gelassen, der orangefarbene Niederschlag abfiltriert und sorgfältig mit viel Wasser und heißem Methanol gewaschen. Das Rohprodukt wird im Vakuumtrockenschrank bei 100°C getrocknet und aus Dimethylformamid umkristallisiert.

Ausbeute : 24 g (87% d.Th.), Schmelzpunkt 241 - 242°C

Analyse:

| | C | H | N | S |
|---|---|---|---|---|
| ber. (%) | 54,95 | 3,08 | 5,34 | 18,73 |
| gef. (%) | 54,79 | 3,26 | 5,25 | 18,46 |

b) Katalytische Hydrierung von 1,4-Bis(4-nitrophenylthio)diphenylsulfon

Ansatz: 50 g (95 mmol) 1,4-Bis(4-nitrophenylthio)diphenylsulfon
20 g Raney-Nickel
500 ml Dimethylformamid (DMF)

50 g 1,4-Bis(4-nitrophenylthio)diphenylsulfon werden mit Ra-Ni als Katalysator in Dimethylformamid 20 Stunden bei 95°C und 105 bar hydriert. Nach Abkühlen des Reaktionsgemisches wird das Ra-Ni über Hyflo(R) (Kieselsäure) abfiltriert, das Diamin unter Rühren in 3 l Wasser ausgefällt, abfiltriert, im Vakuumtrockenschrank bei 100°C getrocknet und aus Ethylenglykol umkristallisiert.

Ausbeute : 40 g (91% d.Th), Schmelzpunkt 210 - 214°C

| | C | H | N | S |
|---|---|---|---|---|
| ber. (%) | 62,03 | 4,35 | 6,03 | 20,70 |
| gef. (%) | 61,87 | 4,47 | 5,89 | 20,32 |

$^1$H-NMR: delta = 5,70 (4H,s) : 2.($-NH_2$)
delta = 6,75-7,90(16H,4.d) :Aromat.H

Nach $D_2O$-Austausch verschwand der Peak bei 5,70.

Beispiel 2 :

Herstellung eines Polyimids aus 1,4-Bis(4-aminophenylthio)diphenylsulfon und Benzophenontetracarbonsäuredianhydrid

Ansatz :
3,2223 g (10 mmol) Benzophenontetracarbonsäuredianhydrid (BTDA)
4,6464 g (10 mmol) 1,4-Bis (aminophenylthio)diphenylsulfon
100 ml abs. Dimethylacetamid (DMA)

Die Apparatur, bestehend aus einem 250 ml-Dreihalskolben mit Rührer, Thermometer, Trockenrohr und Stickstoffzuleitung, wird im trockenen Stickstoffstrom ausgeflammt. Das Diamin wird in 80 ml Dimethylacetamid vorgelegt und bei Raumtemperatur unter Rühren gelöst. Wenn die gesamte Diaminmenge in Lösung gegangen ist, wird das Reaktionsgemisch auf ca. 5 bis 10°C abgekühlt und festes BTDA in 2 Portionen zugegeben, wobei die BTDA-Reste sorgfälig mit DMA nachgespült werden. Nach 20 Stunden Rühren bei Raumtemperatur wird eine Polyamidsäure mit einer inhärenten Viskosität von 0,39 dl/g (0,5 Gew.% in Dimethylacetamid) erhalten, die chemisch oder thermisch zum Polyimid cyclisiert werden kann.

Zu einer Polyamidsäure-Lösung mit einer inhärenten Viskosität von 0,55 dl/g kommt man durch Umsetzung der Reaktionspartner in ca. 20%iger Lösung, die sich mit Hilfe eines Folienziehgerätes (0,5 mm Spalthöhe) auf mit Chromschwefelsäure gereinigten Glasplatten (10 × 20 cm) aufbringen läßt. Die thermische Überführung der Polyamidsäure in das Polyimid erfolgt beispielsweise nach folgedem Temperaturprogramm :

| | | | |
|---|---|---|---|
| 16 | Stunden | bei | 50°C |
| 0,5 | Stunden | bei | 70°C |
| 0,5 | Stunden | bei | 90°C |
| 0,5 | Stunden | bei | 100°C |
| 0,5 | Stunden | bei | 120°C |
| 0,5 | Stunden | bei | 140°C |
| 0,5 | Stunden | bei | 150°C |
| 2 | Stunden | bei | 180°C |
| 0,5 | Stunden | bei | 200°C |
| 1 | Stunde | bei | 230°C |
| 1 | Stunde | bei | 240°C |
| 1 | Stunde | bei | 250°C |

Die Thermostabilität der so erhaltenen Polymidfolie, die sich bis zu 10 Gew.% z.B. in Dimethylacetamid oder N-Methylpyrrolidon löst, liegt bei 500°C (Thermogravimetrische Analyse (TGA), 10°C/min, in Luft, 5% Verlust) die Glastemperatur beträgt 250°C.
Die Reißfestigkeit wurde zu 79 ± 4 N/mm², der E-Modul zu 2315 ± 9 N/mm², die Reißdehnung zu 4,5 ± 0,1% und der dielektrische Verlustfaktor zu 0,005 bestimmt.

Zur Herstellung eines chemisch cyclisierten Preßpulvers werden 10 g der etwa 20%igen Polyamidsäure-Lösung in 30 ml eines Gemisches aus 3 Volumenteilen Pyridin und 2 Volumenteilen Essigsäureanhydrid eingetropft und 20 Stunden bei Raumtemperatur gerührt. Es entsteht eine gelbe, gel-artige Suspension. Diese wird auf ein Gemisch aus je einem Volumenteil Wasser und Methanol getropft und die entstehende Suspension möglichst gut mit einem "Turrax"-Mixer homogenisiert. Das entstandene gelbe Pulver wird abgenutscht, gründlich mit Methanol gewaschen und bei 130°C im Vakuumtrockenschrank gewichtskonstant getrocknet. Seine Elementaranalyse entspricht einem vollcyclisierten Polyimid, das sich ebenfalls zu 10 Gew.% in Dimethylacetamid oder N-Methylpyrrolidon löst und in einer Presse bei einer Temperatur von 350°C und einem Druck von 600 bar zu einem Prüfkörper verformt werden kann, der vergleichbare thermische und mechanische Eigenschaften aufweist, wie das thermisch cyclisierte Polyimid.

Beispeil 3 :

Herstellung eines Polyamidimids aus 1,4-Bis (4-aminophenylthio)diphenylsulfon und Trimellitsäureanhydrichlorid

3,2525 g (7 mmol) 1,4-Bis(4-aminophenylthio)diphenylsufon
1,4740 g (7 mmol)Trimellitsäureanhydridchlorid (TMACL)
0,7085 g (7 mmol) Triäthylamin
65 ml abs. Dimethylacetamid (DMA)

Die Apparatur, bestehend aus einem 100 ml Dreihalskolben mit Rührer, Thermometer, Tropftrichter mit Druckausgleich und aufgesetztem Trockenrohr und Stickstoffzuleitung wird im trockenen Stickstoffstrom ausgeflammt. Im Kolben wird das Diamin im $N_2$-Strom in 35 ml Dimethylacetamid vorgelegt und die erhaltene Lösung mit Aceton/Trockeneis auf −15°C gekühlt. Bei dieser Temperatur wird portionsweise Trimellitsäureanhydridchlorid in fester Form zugegeben. Mit ca. 10 ml Dimethylacetamid werden die Trimellitsäureanhydridchlorid-Reste vorsichtig nachgespült. Nach Zugabe des Trimellitsäureanhydridchlorids wird das Reaktonsgemisch 1 Stunde bei −5°C und über Nacht bei Raumtemperatur in $N_2$-Strom gerührt. Dann wird zum Abfangen der entstandenen HCl bei ca. 5°C eine Lösung von Triäthylamin in 5 ml Dimethylacetamid zugetropft, das Reaktionsgemisch 3 Stunden bei Raumtemperatur gerührt und anschließend über Nacht in der Tiefkühltruhe bei ca. -15°C aufbewahrt. Das ausgefallene Triäthylaminhydrochlorid wird unter $N_2$ mittels einer Umkehrfritte abfiltriert und anschließend dreimal mit insgeamt 15 ml Dimethylacetamid gewaschen. Man erhält eine Lösung einer Polyamidamidsäure mit einer inhärenten Viskosität von 0,35 dl/g

(0,5 Gew.% in Dimethylacetamid), die analog Beispiel 2 chemisch oder thermisch cyclisiert werden kann. Die Thermostabilität einer so hergestellten Polyamidimid-Folie, die sich zu bis zu 20 Gew.% in z. B. Dimethylacetamid oder N-Methylpyrrolidon löst, liegt bei 445° (TGA in Luft, 5% Verlust), die Glastemperatur beträgt 258°C. Die Reißfestigkeit wurde zu 85,6 ± 8,2 N/mm², der E-Modul zu 1268 ± 142 N/mm², die Reißdehnung zu 10 ± 1,9% und der dielektrische Verlustfaktor zu 0,006 bestimmt.

Beispiel 4 :

Herstellung eines Polyimids aus 1,4-Bis(4-aminophenylthio)diphenylsulfon und Pyromellitsäuredianhydrid

2,1812 g Pyromellitsäuredianhydrid (PMDA)
4,6464 g (10 mmol) 1,4-Bis(4-aminophenylthio)diphenylsulfon
50 ml abs. Dimethylacetamid (DMA)

Ein 250 ml Dreihalskolben mit Rührer, Thermometer, Trockenrohr und Stickstoffzuleitung wird im trockenen Stickstoffstrom ausgeflammt. Das Diamin wird in 30 ml Dimethylacetamid bei Raumtemperatur unter Rühren gelöst und auf 5-10°C abgekühlt. Dann wird festes Pyromellitsäuredianhydrid in 2 Portionen zugegeben, wobei die Pyromellitsäuredianhydrid-Reste sorgfältig mit Dimethylacetamid nachgespült werden. Nach 20 Stunden Rühren bei Raumtemperatur wird eine Polyamidsäure mit einer inhärenten Viskosität von 0,55 dl/g (0,5 Gew.% in Dimethylacetamid) erhalten, die analog Beispiel 2 zum Polyimid cyclisiert werden kann.
Die Thermostabilität einer so hergestellten Polyimid-Folie liegt bei 500°C (TGA in Luft, 5% Verlust), die Glastemperatur beträgt 280°. Die Reißfestigkeit der Folie wurde zu 93 N/mm², der E-Modul zu 2640 N/mm², die Reißdehnung zu 7% und der dielektrische Verlustfaktor zu 0,003 bestimmt.

Beispiel 5 :

Herstellung eines Polyamidimids aus 1,4-Bis-(4-aminophenylthio)diphenylsulfon, Pyromellitsäuredianhydrid und Trimellitsäureanhydridchlorid

Die Vorgangsweise von Beispiel 3 wird wiederholt, mit dem Unterschied, daß

1,5268 g (7 mmol) Pyromellitsäuredianhydrid
1,4740 g (7 mmol) Trimellitsäureanhydridchlorid
6,5050 g (14 mmol) 1,4-Bis-(4-Aminophenylthio)diphenylsulfon
0,7085 g (7 mmol) Triethylamin und
70 ml abs. Dimethylacetamid

eingesetzt werden.

Man erhält eine Polyamidamidsäure-Lösung mit einer inhärenten Viskosität von 0,65 dl/g (0,5 Gew.% in Dimethylacetamid), die analog Beispiel 2 thermisch oder chemisch cyclisiert werden kann. Die Thermostabilität einer daraus hergestellten Polyamidimid-Folie liegt bei 470°C (TGA in Luft, 5% Verlust), die Glastemperatur beträgt 265°C. Die Reißfestigkeit der Folie wurde zu 87 N/mm², der E- Modul zu 2320 N/mm², die Reißdehnung zu 10% und der dielektrische Verlustfaktor zu 0,0055 bestimmt.

Beispiel 6 :

Herstellung eines Polyamidimids aus 1,4-Bis-(4-aminophenylthio)diphenylsulfon, Benzophenontetracarbonsäuredianhydrid und Trimellitsäureanhydridchlorid.

Die Vorgangsweise von Beispiel 3 wird wiederholt mit dem Unterschied, daß

3,2223 g (10 mmol) Benzophenontetracarbonsäuredianhydrid
2,1057 g (10 mmol) Trimellitsäureanhydridchlorid
9,2928 g (20 mmol 1,4-Bis-(4-aminophenylthio)diphenylsulfon

1,0119 g (10 mmol) Triethylamin und
100 ml abs. Dimethylacetamid

eingesetzt werden.

Man erhält eine Polyamidamidsäure-Lösung mit einer inhärenten Viskosität von 0,8 dl/g (0,5 Gew.% in Dimethylacetamid), die analog Beispiel 2 thermisch oder chemisch cyclisiert werden kann. Die Thermostabilität einer daraus hergestellten Polyamidimid-Folie, die sich bis zu 20 Gew.% in polaren Lösungsmitteln wie z.B. Dimethylacetamid, N-Methylpyrrolidon löst, liegt bei 475°C (TGA in Luft, 5% Verlust), die Glastemperatur beträgt 270°C. Die Reißfestigkeit der Folie wurde zu 95 N/mm², der E-Modul zu 1980 N/mm², die Reißdehnung zu 6% und der dielektrische Verlustfaktor zu 0,0045 bestimmt.

## Ansprüche

### Patentansprüche für die Vertragsstaaten : AT, BE, CH, ES, IT, LI, SE

1. Lösliche und/oder schmelzbare, bis 500°C in Luft beständige Polyimide oder Polyamidimide, enthaltend sich wiederholende Einheiten der allgemeinen Formel

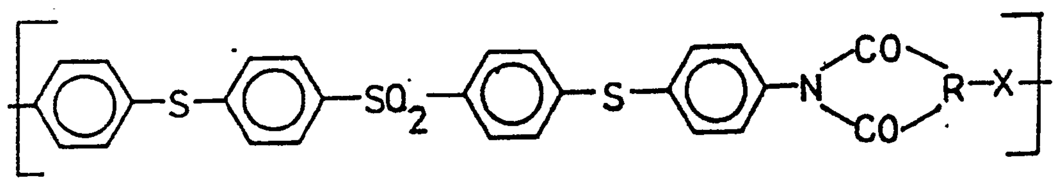

worin
R einen tri- oder tetravalenten aromatischen oder heteroaromatischen Rest und
-X- falls R tetravalent ist, einen Rest der Formel

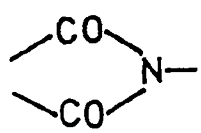

und falls R trivalent ist, den Rest -CO-NH-darstellt,
oder Mischungen der tri- oder tetravalente Reste R enthaltenden Einheiten.

2. Polyamidimide gemäß Anspruch 1, dadurch gekennzeichnet, daß sie sowohl Einheiten mit trivalenten als auch mit tetravalenten Resten R enthalten.

3. Polyimide gemäß Anspruch 1, dadurch gekennzeichnet, daß der Rest R einen Benzophenonrest darstellt.

4. Polyimide oder Polyamidimide gemäß Anspruch 1 oder 2, dadurch gekennzeichnet, daß der Rest R einen Benzolrest darstellt.

5. Verfahren zur Herstellung von löslichen und/oder schmelzbaren, bis 500°C in Luft beständigen Polyimiden oder Polyamidimiden, enthaltend sich wiederholende Einheiten der allgemeinen Formel

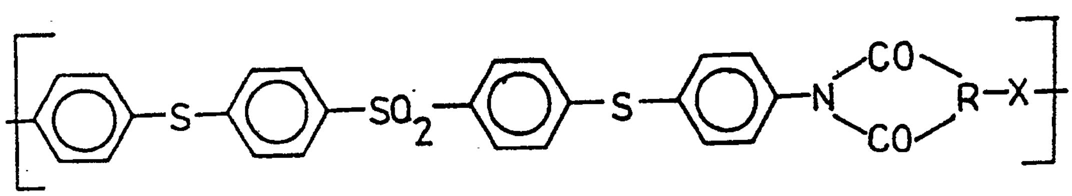

worin

R einen tri- oder tetravalenten aromatischen oder heteroaromatischen Rest und

-X- falls R tetravalent ist, einen Rest der Formel

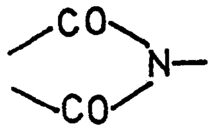

und falls R trivalent ist, den Rest -CO-NH-darstellt

oder Mischungen der tri- oder tetravalente Reste R enthaltenden Einheiten, dadurch gekennzeichnet, daß man Tri- oder Tetracarbonsäuren des Restes R, deren reaktive Derivate, wie Anhydride, Säurechloride oder Ester, Gemische der Tri- und Tetracarbonsäuren oder deren reaktive Derivate, mit einem Diamin der Formel

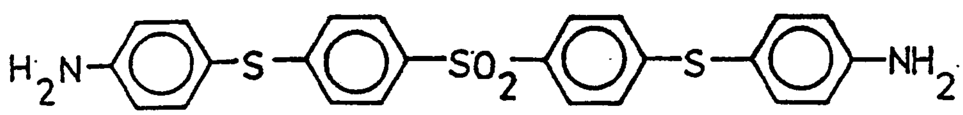

umsetzt und die zunächst entstehenden Polyamidsäuren oder Polyamidamidsäuren chemisch oder thermisch cyclisiert.

6. Verfahren gemäß Anspruch 5, dadurch gekennzeichnet, daß man Gemische von Tri- und Tetracarbonsäuren, oder deren reaktive Derivate mit dem Diamin der Formel

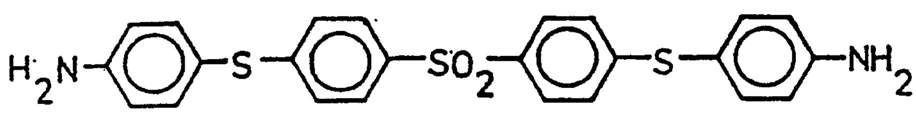

umsetzt.

7. Verfahren gemäß Anspruch 5 oder 6, dadurch gekennzeichnet, daß man als Tetracarbonsäure-Derivat Benzophenontetracarbonsäuredianhydrid verwendet.

8. Verfahren gemäß Anspruch 5 oder 6, dadurch gekennzeichnet, daß man als Tetracarbonsäure-Derivat Pyromellitsäuredianhydrid verwendet.

9. Verfahren gemäß Anspruch 5 oder 6, dadurch gekennzeichnet, daß man als Tricarbonsäure-Derivat Trimellitsäureanhydridchlorid verwendet.

10. Verfahren gemäß Anspruch 5 oder 6, dadurch gekennzeichnet, daß man Gemische von Benzophenontetracarbonsäuredianhydrid oder Pyromellitsäuredianhydrid mit Trimellitsäureanhydridchlorid verwendet.

## Ansprüche

### Patentansprüche für die Vertragsstaaten : DE, FR, GB, NL

1. Lösliche und/oder schmelzbare, bis 500°C in Luft beständige Polyimide enthaltend sich wiederholende finheiten der allgemeinen Formel

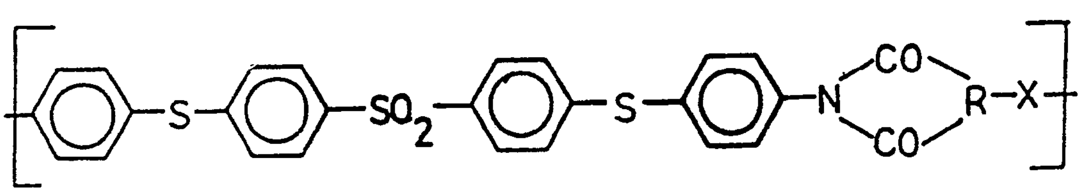

worin
R einen tetravalenten aromatischen oder heteroaromatischen Rest und
-X- einen rest der Formel

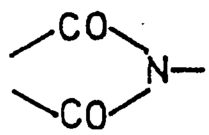

darstell,
sowie Einheiten der obigen Formel ; in denen R einen trivalenten aromatischen oder heteroaromatischen rest und -X- den rest -CO-NH- darstellt.

2. Polyamidimide gemäß Anspruch 1, dadurch gekennzeichnet, daß sie sowohl Finheiten mit trivalenten als auch mit tetravalenten resten R enthalten.

3. Polyamide gemäß Anspruch 1, dadurch gekennzeichnet, daß der Rest R einen Benzophenonrest darstellt.

4. Polyimide gemäß 1 oder 2, dadurch gekennzeichnet, daß der Rest einen Benzolrest darstellt.

5. Verfahren zur Herstellung von löslichen und/oder schmelzbaren, bis 500°C in luft beständigen Polyimiden, enthaltend sich wiederholende Finheiten der allgemeinen Formel

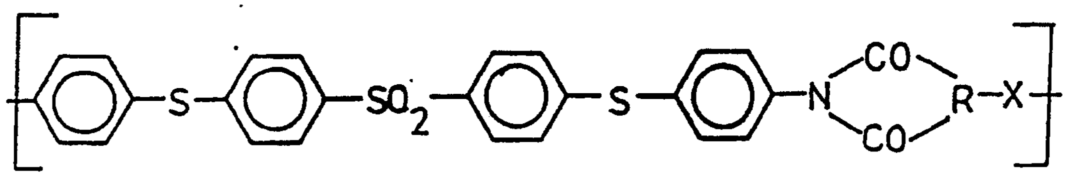

worin
R einen tetravalenten aromatischen oder heteroaromatischen rest und
-X- einen rest der Formel

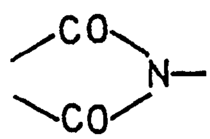

darstell,
sowie gegebenenfalls Einheiten der obigen Formel, in denen R einen trivalenten aromatischen oder heteroaromatischen Rest und -X- den Rest -CO-NH- darstellt, dadurch gekennzeichent, daß man Tetracarbonsäuren und gegebenenfalls carbonsäuren des Restes R, oder deren reaktive Derivate, wie Anhydride, Säurechloride oder Ester, mit einem Diamin der Formel

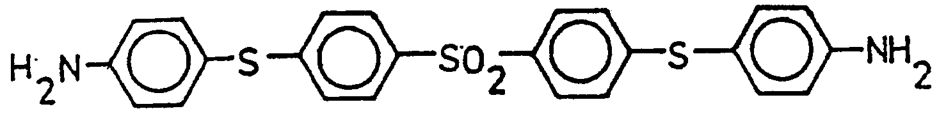

umsetzt und die sunächst entstehenden Polyamidsäuren bzw. Polyamidamidsäuren chemisch oder thermisch cyclisiert.

6. Verfahren gemäß Anspruch 5, dadurch gekennzeichnet, daß man Gemische von tri- und Tetracarbonsäuren, oder deren reaktive Derivate mit dem, Diamin der Formel

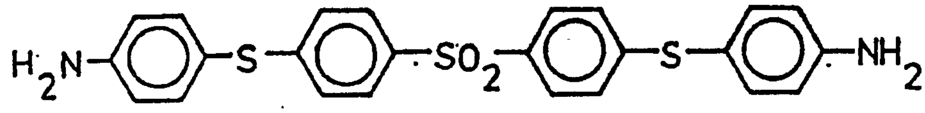

Umsetzt.

7. Verfahren gemäß Anspruch 5 oder 6, dadurch gekennzeichnet, daß man als Tetracarbonsäure-Derivat Benzophenontetracarbonsäuredianhydrid verwendet.

8. Verfahren gemäß Anspruch 5 oder 6, dadurch gekennzeichnet, daß man als Tetracarbonsäure-Derivat Pyromellitsäuredianhydrid verwendet.

9. Verfahren gemäß Anspruch 5 oder 6, dadurch gekennzeichnet, daß man als Tricarbonsäure-Derivat Trimellitsäureanhydridchlorid verwendet.

10. Verfahren gemäß Anspruch 5 oder 6, dadurch gekennzeichnet, daß man Gemische von Benzophenontetracarbonsäuredianhydrid oder Pyromellitsäuredianhydrid mit Trimellitsüureanhydridchlorid verwendet.

## Claims

### Claims for the Contracting States : At, BE, CH, ES, IT, LI, SE

1. Soluble and/or fusible polyimides or polyamideimides which are stable in air up to 500°C and contain recurring units of the general formula

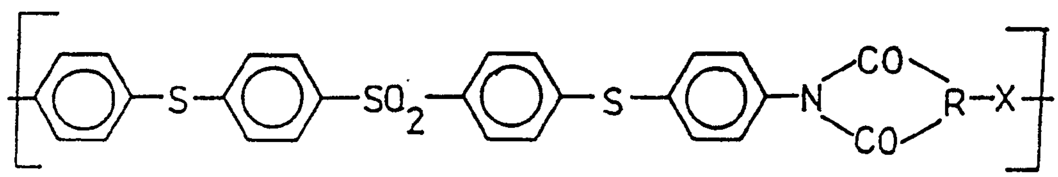

in which
R represents a trivalent or tetravalent aromatic or heteroaromatic radical and
-X- represents a radical of the formula

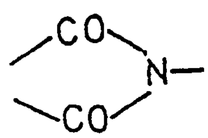

if R is tetravalent and the radical -CO-NH- if R is trivalent, or units containing mixtures of the trivalent or tetravalent radicals R.

2. Polyamide-imides according to Claim 1, characterized in that they contain both units having trivalent radicals R and units having tetravalent radicals R.

3. Polyimides according to Claim 1, characterized in that the radical R represents a benzophenone radical.

4. Polyimides or polyamide-imides according to Claim 1 or 2, characterized in that the radical R represents a benzene radical.

5. Process for the preparation of soluble and/or fusible polyimides or polyamide-imides which are stable in air up to 500°C and contain recurring units of the general formula

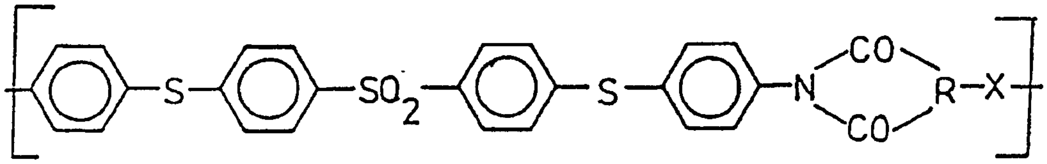

in which
R represents a trivalent or tetravalent aromatic or heteroaromatic radical and
-X- represents a radical of the formula

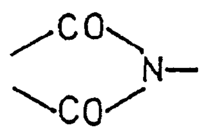

if R is tetravalent and the radical -CO-NH- if R is trivalent, or units containing mixtures of the trivalent or tetravalent radicals R, which is characterized in that tricarboxylic or tetracarboxylic acids of the radical R, reactive derivatives thereof, such as anhydrides, acid chlorides or esters, or mixtures of the tricarboxylic and tetracarboxylic acids or reactive derivatives thereof, are reacted with a diamine of the formula

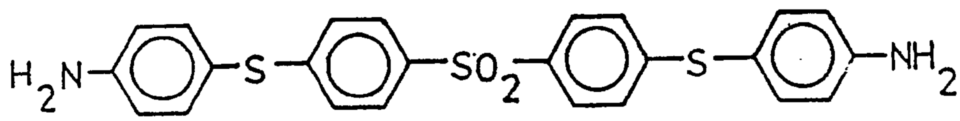

and the polyamide-acids or polyamide-amic acids initially formed are cyclized by chemical or thermal means.

6. Process according to Claim 5, characterized in that mixtures of tricarboxylic and tetracarboxylic acids, or reactive derivatives thereof, are reacted with the diamine of the formula

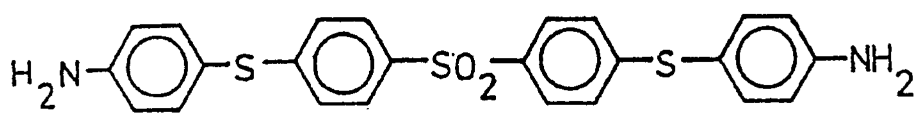

7. Process according to Claim 5 or 6, characterized in that benzophenonetetracarboxylic dianhydride is used as the tetracarboxylic acid derivative.

8. Process according to Claim 5 or 6, characterized in that pyromellitic dianhydride is used as the tetracarboxylic acid derivative.

9. Process according to Claim 5 or 6, characterized in that trimellitic an hydride-chloride is used as the tricarboxylic acid derivative.

10. Process according to Claim 5 or 6, characterized in that mixtures of benzophenonetetracarboxylic dianhydride or pyromellitic dianhydride with trimellitic anhydride-choride are used.

**Claims for the Contracting States. DE, FR, GB, NL**

1. Soluble and/or fusible polyimides which are stable in air up to 500°C and contain recurring units of general formula

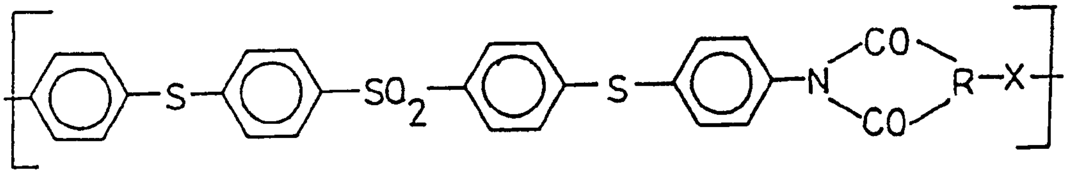

in which
R represents a tetravalent aromatic or heteroaromatic radical and
-X- represents a radical of the formula

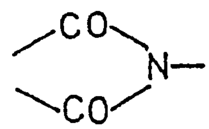

and, if appropriate, units of the above formula in which R represents a trivalent aromatic or heteroaromatic radical and -X- represents the radical -CO-NH-.

2. Polyamide-imides according to Claim 1, characterized in that they contain both units having trivalent radicals R and units having tetravalent radicals R.

3. Polyimides according to Claim 1, characterized in that the radical R represents a benzophenone radical.

4. Polyimides according to Claim 1 or 2, characterized in that the radical R represents a benzene radical.

5. Process for the preparation of soluble and/or fusible polyimides which are stable in air up to 500°C and contain recurring units of the general formula

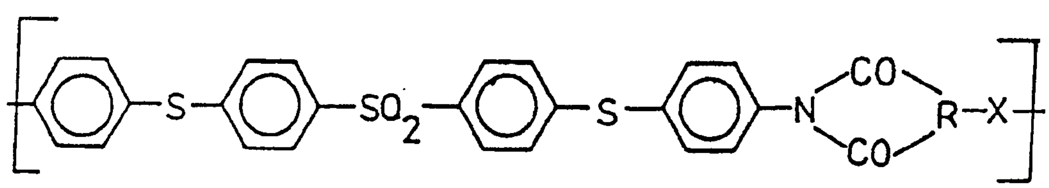

in which
R represents a tetravalent aromatic or heteroaromatic radical and
-X- represents a radical of the formula

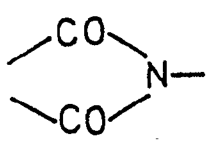

and, if appropriate, units of the above formula in which R represents a trivalent aromatic or heteroaromatic radical and -X- represents the radical -CO-NH-, characterized in that tetracarboxylic and, if appropriate tricarboxylic, acids of the radical R, or reactive derivatives thereof, such as anhydrides, acid chlorides or esters, are reacted with a diamine of the formula

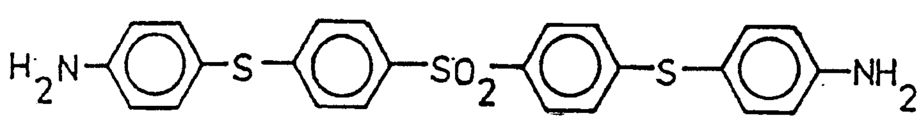

and the polyamide-acids and/or polyamide-amic acids initially formed are cyclized by chemical or thermal means.

6. Process according to Claim 5, characterized in that mixtures of tricarboxylic and tetracarboxylic acids, or reactive derivatives thereof, are reacted with the diamine of the formula.

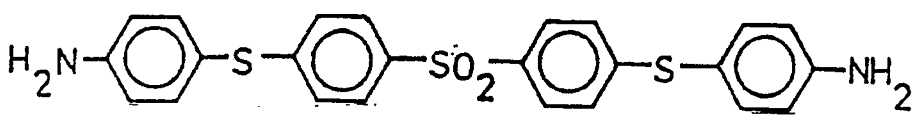

7. Process according to Claim 5 or 6, characterized in that benzophenonetetracarboxylic dianhydride is used as the tetracarboxylic acid derivative.

8. Process according to Claim 5 or 6, characterized in that pyromellitic dianhydride is used as the tetracarboxylic acid derivative.

9. Process according to Claim 5 or 6, characterized in that trimellitic anhydride-chloride is used as the tricarboxylic acid derivative.

10. Process according to Claim 5 or 6, characterized in that mixtures of benzophenonetetracarboxylic dianhydride or pyromellitic dianhydride with trimellitic anhydride-chloride are used.

## Revendications

**REVENDICATIONS pour les Etats Contractants : AT BE CH ES IT LI SE**

1. Polyimides ou polyamides-imides solubles et/ou fusibles, stables dans l'air à 500°C, renfermant une répétition de motifs de formule générale I :

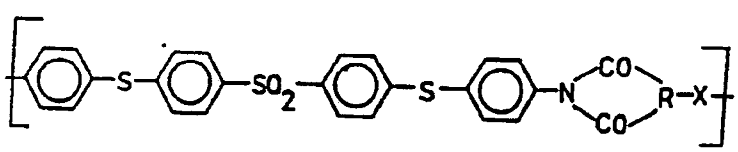

I

dans laquelle
R représente un groupe aromatique tri- ou tétravalent ou hétéroaromatique,
-X- si R est tétravalent représente un groupe de formule II :

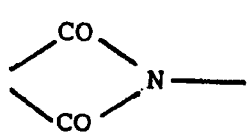

(II)

et si R est trivalent un groupe de formule -CO-NH-, ou bien des mélanges de motifs renfermant des groupes R tri-ou tétravalents.

2. Polyamides-imides selon la revendication 1, caractérisés en ce qu'ils renferment des motifs comportant aussi bien des restes R trivalents que tétravalents.

3. Polyimides selon la revendication 1, caractérisés en ce que le groupe R est un groupe benzophénone

4. Polyimides ou polyamides-imides selon la revendications 1 ou 2, caracterisés en ce que le groupe R représente un groupe benzénique.

5. Procédé de préparation de polyimides ou polyamides-imides solubles et/ou fusibles, stables dans l'air jusqu'à 500°C, renfermant une répétition de motifs de formule générale :

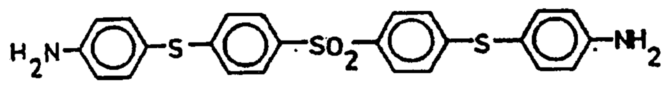 III

dans laquelle :
R représente un groupe aromatique tri- ou tétravalent ou hétéroaromatique,
-X- si R est tétravalent, représente un groupe de formule

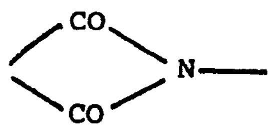 (II)

et si R est trivalent un groupe de formule -CO-NH-, ou bien des mélanges de motifs renfermant des groupes R tri-ou tétravalents, caractérisé en ce qu'on fait réagir des acides tri- ou tétracarboxyliques des groupes R, leurs dérivés réactifs comme les anhydrides, chlorures d'acide ou esters, des mélanges des acides tri- ou tetracarboxyliques ou leurs dérivés réactifs, avec une diamine de formule :

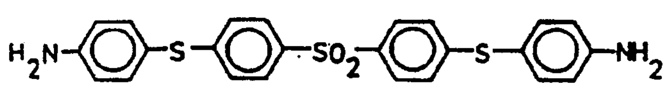 III

et en ce qu'on réalise une cyclisation des acides polyamides ou polyamides-amides ainsi obtenus, chimiquement ou thermiquement.

6. Procédé selon la revendication 5, caractérisé en ce qu'on fait réagir le mélange d'acides tri- ou tétracarboxyliques ou leurs dérivés réactifs avec la diamine de formule

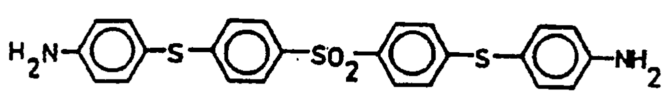 III

7. Procédé selon la revendication 5 ou 6, caractérisé en ce qu'on utilise comme dérivé acide tétracarboxylique le dianhydride de l'acide benzophénone tétracarboxylique.

8. Procédé selon la revendication 5 ou 6, caractérisé en ce qu'on utilise comme dérive acide tetracarboxylique le dianhydride de l'acide pyromellitique.

9. Procédé selon la revendication 5 ou 6, caractérisé en ce qu'on utilise comme dérive tricarboxylique le chlorure d'anhydride trimellitique.

10. Procédé selon la revendication 5 ou 6, caractérisé en ce qu'on utilise le mélange de dianhydride de l'acide benzophénone tétracarboxylique ou bien le dianhydride de l'acide pyromellitique avec le chlorure d'anhydride de l'acide trimellitique.

**REVENDICATIONS pour les Etats Contractants : DE, FR, GB, NL**

1. Polyimides solubles et/ou fusibles, stables dans l'air à 500°C, renfermant une répétition de motifs de formule générale :

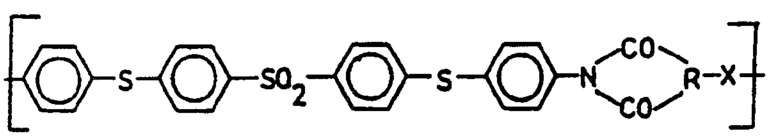 I

dans laquelle :
R représente un groupe aromatique tétravalent ou hetéroaromatique,
-X- un reste de formule :

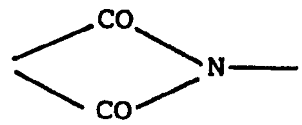

(II)

ainsi que le cas échéant les motifs de la formule ci-dessus dans lesquels R représente un groupe trivalent aromatique ou hétéroaromatique et -X- le reste -CO-NH-.

2. Polyamides-imides selon la revendication 1, caractérisés en ce qu'ils renferment aussi bien des groupes trivalents que tétravalents.

3. Polyimides selon la revendication 1, caractérisés en ce que R représente un groupe benzophénone.

4. Polyimides selon la revendication 1 ou 2, caractérisés en ce que R représente un groupe benzénique.

5. Procédé de préparation de polyimides solubles et/ou fusibles, stables à 500°C dans l'air, renfermant une répétition de motifs de formule générale :

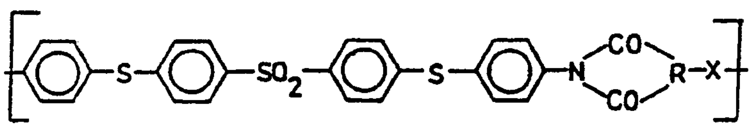

I

dans laquelle :
R représente un groupe aromatique tétravalent ou hétéroaromatique,
-X- un groupe de formule :

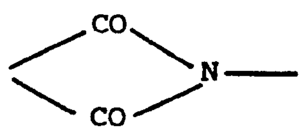

(II)

ainsi que le cas échéant les motifs de la formule ci-dessus dans lesquels R est un groupe aromatique trivalent ou hétéroaromatique et -X- le reste -CO-NH-, caracterisé en ce qu'on fait réagir les acides tétracarboxyliques et le cas échéant tricarboxyliques du groupe R ou leurs dérivés réactifs, tels les anhydrides, les chlorures d'acide ou les esters, avec une diamine de formule

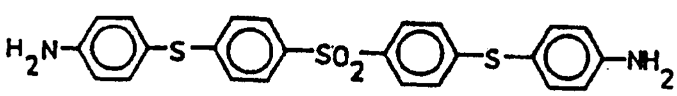

III

et en ce qu'on réalise une cyclisation des acides polyamides ou polyamides-amides, chimiquement ou thermiquement.

6. Procédé selon la revendication 5, caractérisé en ce qu'on fait réagir un mélange d'acides tri- et tétracarboxyliques, ou leurs dérivés réactifs avec la diamine de formule :

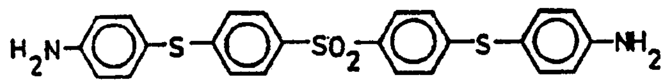 III

7. Procédé selon la revendication 5 ou 6, caractérisé en ce qu'on utilise comme dérivé acide tétracarboxylique le dianhydride de l'acide benzophénone tétracarboxylique.

8.- Procédé selon la revendication 5 ou 6, caractérisé en ce qu'on utilise comme dérivé tétracarboxylique le dianhydride de l'acide pyromellitique.

9. Procédé selon la revendication 5 ou 6, caractérisé en ce qu'on utilise comme dérivé tricarboxylique le chlorure d'anhydride trimellitique.

10. Procédé selon la revendication 5 ou 6, caractérisé en ce qu'on utilise le mélange de dianhydride de l'acide benzophénone tétracarboxylique ou bien le dianhydride de l'acide pyromellitique avec le chlorure d'anhydride de l'acide trimellitique.

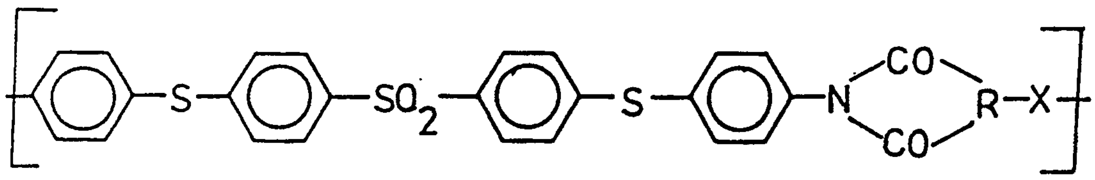

I

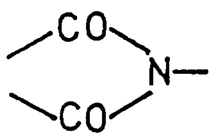

II

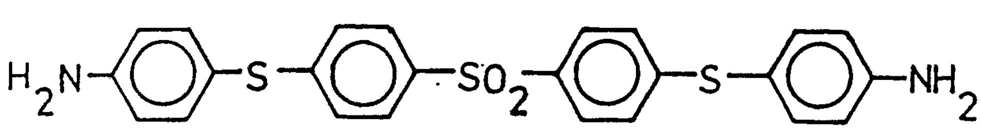

III